# EUROPEAN PATENT APPLICATION

(11) **EP 3 797 940 A1**
(43) Date of publication of application: **31.03.2021**
(21) Application number: 19806523.7
(22) Date of filing: 16.04.2019
(51) Int. Cl.: B25J 15/00, B25J 15/08, G07D 11/00

(54) **ROBOT HAND AND CONVEYANCE DEVICE**

(30) Priority: 22.05.2018 JP 2018097804
(71) Applicant: Japan Cash Machine Co., Ltd., Osaka-shi, Osaka 547-0035 (JP)
(72) Inventor: UEMIZO Yoshiaki, Osaka-shi, Osaka 547-0035 (JP); UEDA Takashi, Osaka-shi, Osaka 547-0035 (JP)
(74) Representative: TBK
(86) International application number: PCT/JP2019/016238
(87) International publication number: WO 2019/225221

(57) **Abstract**

The issue to be solved by the present invention is to provide a robot hand that places all thin materials in a thin bundle such as a bundle of bills at a prescribed position. A robot hand 100 of the present invention includes a first finger portion 110, a second finger portion 120, a finger portion moving mechanism 130, a pressing portion 140, and a pressing portion reciprocating mechanism 150. The second finger portion is disposed to be opposite to the first finger portion. The finger portion moving mechanism moves at least one of the first finger portion and the second finger portion along an opposite direction of the first finger portion and the second finger portion. The pressing portion reciprocating mechanism reciprocates the pressing portion along a direction parallel to a depth direction of the first finger portion.

## Description

### TECHNICAL FIELD

The present invention relates to a robot hand. The present invention also relates to a conveying device using a robot hand and an arm.

### BACKGROUND ART

In the past, "a bill processing apparatus using an arm having a robot hand" has been proposed (e.g., see Japanese Unexamined Patent Publication No. S62-92095 or the like). In such a bill processing apparatus, a bundle of bills are conveyed to a bill identification unit for identifying and counting bills with the arm having the robot hand; the number of bills for each denomination is then counted while a bundle of bills are being sorted by denomination in the bill identification unit for identifying and counting bills. The bundle of bills sorted by denomination is conveyed to a prescribed position for each denomination by another arm having a robot hand.

### Prior Art Document

### Patent literature

Patent Document 1: Japanese Unexamined Patent Publication No. S62-92095

### Summary of the invention

### Problem to be solved by invention

By the way, such a bill processing apparatus performs the following operation: when the arm having the robot hand coveys the bundle of bills to the bill identification unit for identifying and counting bills, the arm inserts the robot hand into a bill bundle placing tray of the bill identification unit for identifying and counting bills and then releases the bundle of bills by spreading finger portions of the robot hand to take the robot hand out of the bill bundle placing tray using the arm. In this case, the lower portion of the bundle of bills is dragged to the finger portion of the robot hand positioned on the side of the bill bundle placing tray, and the bill at that portion may fall from the bill bundle placing tray.

The issue to be solved by the present invention is to provide a robot hand and conveying device that place all thin materials in a thin bundle such as a bundle of bills at a prescribed position.

### Problem to be solved by invention

A robot hand according to a first aspect of the present invention includes a first finger portion, a second finger portion, a finger portion moving mechanism, a pressing portion, and a pressing portion reciprocating mechanism. The second finger portion is provided to be opposite to the first finger portion. The finger portion moving mechanism moves at least one of the first finger portion and the second finger portion along an opposite direction of the first finger portion and the second finger portion. The pressing portion reciprocating mechanism reciprocates the pressing portion along a direction parallel to a depth direction of the first finger portion.

As described above, the robot hand is provided with the pressing portion and the pressing portion reciprocating mechanism. After a controller inserts the robot hand all the way in a tray and the like disposed at a prescribed position using an arm in a state in which the robot hand is attached to the arm and the controller, it separates the first finger portion and the second finger portion of the robot hand from each other while pushing the pressing portion forward and then retracts the robot hand. This allows for placing all thin materials in a thin bundle such as a bundle of bills at a prescribed position. Also, after a controller moves the robot hand to the near side portion of the tray and the like disposed at a prescribed position using an arm in a state in which the robot hand is attached to the arm and the controller, it separates the first finger portion and the second finger portion of the robot hand from each other, extrudes the pressing portion of the robot hand forward, and then retracts the robot hand. This allows for placing all thin materials in a thin bundle such as a bundle of bills at a prescribed position.

The robot hand according to a second aspect of the present invention is the robot hand according to the first aspect in which the pressing portion and the pressing portion reciprocating mechanism are disposed in a side opposite to a facing side in which a finger portion of at least one of the first finger portion and the second finger portion faces the other finger portion.

As described above, in the robot hand, the pressing portion and the pressing portion reciprocating mechanism are disposed in a side opposite to a facing side in which a finger portion of at least one of the first finger portion and the second finger portion faces the other finger portion. Thus, the robot hand can freely reciprocate the pressing portion as compared with a case in which the pressing portion and the pressing portion reciprocating mechanism are disposed between one finger portion and the other finger portion.

A conveying device according to a third aspect of the present invention includes the robot hand according to the first or second aspect, an arm, and a controller. The arm is connected to the robot hand. The controller controls operation of the finger portion moving mechanism and the pressing portion reciprocating mechanism of the robot hand and operation of the arm. The controller controls the finger portion moving mechanism to separate the first finger portion and the second finger portion from each other while controlling the pressing portion reciprocating mechanism to push the pressing portion forward, and then controls the arm to move the robot hand backward.

As described above, in the conveying device, the controller controls the finger portion moving mechanism to separate the first finger portion and the second finger portion from each other while controlling the pressing portion reciprocating mechanism to push the pressing portion forward, and then controls the arm to move the robot hand backward. In other words, in the conveying device, after the arm inserts the robot hand all the way in a tray disposed at a prescribed position, the robot hand and the arm are controlled as described above. This allows for placing all thin materials in a thin bundle such as a bundle of bills at a prescribed position.

A conveying device according to a fourth aspect of the present invention includes the robot hand according to the first or second aspect, an arm, and a controller. The arm is connected to the robot hand. The controller controls operation of the finger portion moving mechanism and the pressing portion reciprocating mechanism of the robot hand and operation of the arm. The controller controls the finger portion moving mechanism to separate the first finger portion and the second finger portion from each other, and then controls the pressing portion reciprocating mechanism to push the pressing portion forward, and controls the arm to move the robot hand backward.

As described above, in the conveying device, the controller controls the finger portion moving mechanism to separate the first finger portion and the second finger portion from each other, and then controls the pressing portion reciprocating mechanism to push the pressing portion forward, and controls the arm to move the robot hand backward. In other words, in the conveying device, after the arm moves the robot hand to the near side portion of the tray and the like disposed at a prescribed position, the robot hand and the arm are controlled as described above. This allows for placing all thin materials in a thin bundle such as a bundle of bills at a prescribed position.

### BRIEF DESCRIPTION OF THE DRAWINGS

Fig. 1 is a perspective view of a robot hand according to an embodiment of the present invention.
Fig. 2 is a right-side view of the robot hand according to an embodiment of the present invention in a pressing portion stand-by state.
Fig. 3 is a right-side view of the robot hand according to an embodiment of the present invention in a pressing portion projecting state.
Fig. 4 is a perspective view of a bill container for accommodating a bundle of bills to be taken out by the robot hand according to an embodiment of the present invention.
Fig. 5 is a cross-sectional view showing a state in which the robot hand according to an embodiment of the present invention places a bundle of bills in a placing tray of a bill sorting device.
Fig. 6 is a perspective view showing a state of a sliding receptor when a finger portion of the robot hand according to an embodiment of the present invention is inserted into the bill container.
Fig. 7 is a perspective view showing a state of the sliding receptor when the finger portion of the robot hand according to an embodiment of the present invention is pulled out from the bill container.

### Reference Signs List

- 100: robot hand
- 110: movable finger (first finger portion)
- 120: fixed finger (second finger portion)
- 130: movable finger reciprocating mechanism (finger portion moving mechanism)
- 140: pressing portion
- 150: pressing portion reciprocating mechanism
- RA: arm

### DESCRIPTION OF EMBODIMENTS

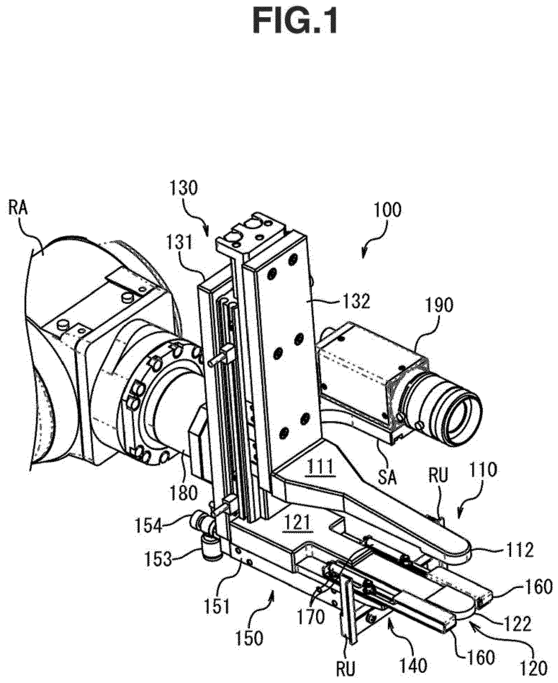

As shown in Fig. 1, a robot hand 100 according to an embodiment of the present invention is a two finger robot hand, and is disposed at the tip of an arm RA. As shown in Fig. 1, the robot hand 100 is mainly composed of a movable finger 110, a fixed finger 120, a movable finger reciprocating mechanism 130, a pressing portion 140, a pressing portion reciprocating mechanism 150, a sliding receptor 160, a sliding receptor bias member 170, a connector 180, and an imaging unit 190. These components will be described in detail below.

### < Components of Robot hand >

### (1) Movable finger

As shown in Fig. 1, the movable finger 110 includes a base portion 111 and a claw portion 112. The base portion 111 is a thick plate portion having a substantially trapezoidal shape. The claw portion 112 is a thick plate portion having an elongated rectangle shape and extends forward from the side surface on the short side of the base portion 111. The movable finger 110 is fixed to an elevating-lowering plate 132 (described later) at the long side of the base portion 111 of the movable finger reciprocating mechanism 130.

### (2) Fixed finger

As shown in Fig. 1, the fixed finger 120 includes a base portion 121 and a claw portion 122. The base portion 121 is a thick plate portion having a rectangle shape. The claw portion 122 is a thick plate portion having an elongated rectangle shape and extends forward from the central side of the front of the base 121; that is, the fixed finger 120 is a thick plate member showing a convex shape as viewed in planar view. The fixed finger 120 is fixed to a support plate 131 (described later) of the movable finger reciprocating mechanism 130. As shown in Fig. 1, the fixed finger 120 faces the movable finger 110 in the reciprocating direction of the movable finger 110.

### (3) Movable finger reciprocating mechanism

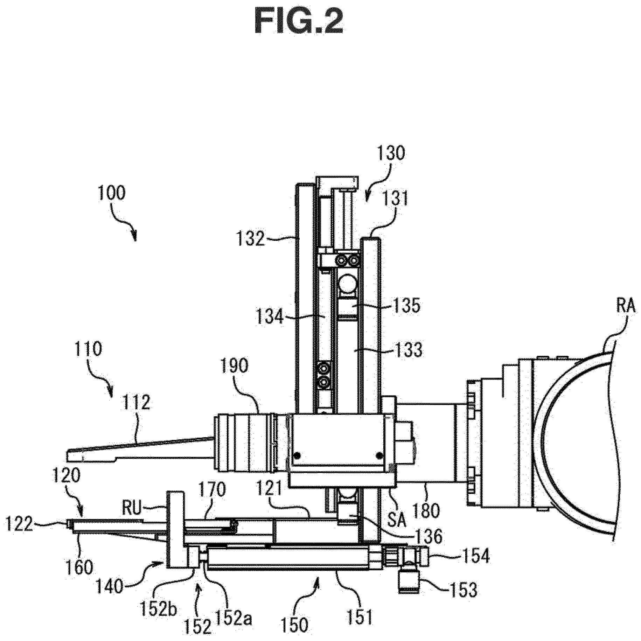

As shown in Figs. 1 to 3, the movable finger reciprocating mechanism 130 is mainly composed of the support plate 131, the elevating-lowering plate 132, an air cylinder mechanism 133, and an elevating-lowering table 134. The support plate 131 supports the air cylinder mechanism 133. The air cylinder mechanism 133, which is a double acting type mechanism, is a driving force for elevating/lowering the elevating-lowering table 134. The air cylinder mechanism 133 is attached to the support plate 131, as mentioned above. The elevating-lowering plate 132 is attached to the elevating-lowering table 134; that is, the air cylinder mechanism 133 elevates/lowers the elevating-lowering plate 132 by elevating/lowering the elevating-lowering table 134. As shown in Figs. 2 to 3, the air cylinder mechanism 133 has an air supply and exhaust openings 135 and 136. Note that an air supply and exhaust tube (not shown) is connected to the air supply and exhaust openings 135 and 136.

### (4) Pressing portion

As shown in Figs. 1 to 3, the pressing portion 140, which is a substantially concave plate member, is attached to a connection piece 152b (described later) of a piston 152 (described later) of the pressing portion reciprocating mechanism 150 such that upright portions RU on both sides extend toward the movable finger. The pressing portion 140 can reciprocate along the front-back direction by the pressing portion reciprocating mechanism 150.

### (5) Pressing portion reciprocating mechanism

The pressing portion reciprocating mechanism 150, which is a double acting type air cylinder mechanism for reciprocating the pressing portion 140 along the front-back direction, is mainly composed of a cylinder block 151, a piston 152, an air supply and exhaust opening 153 and a knob 154, as shown in Fig. 1. The cylinder block 151, which is a substantially rectangle shaped member, is joined to the side opposite to the movable finger facing side of the fixed finger 120, as shown in Fig. 1. Two rows of cylinder holes (not shown) are formed along the longitudinal direction inside the cylinder block 151. The piston 152 includes a pair of pistons 152a and a connecting piece 152b. The pair of pistons 152a extends in parallel in the same direction from a surface of the connecting piece 152b. The pair of pistons 152a is each inserted into the two rows of cylinder holes. The above-described pressing portion 140 is joined to a side of the connecting piece 152b, which is a side opposite to the piston extension side of the connecting piece 152b. The air supply and exhaust openings 153 are each provided on right and left sides. Air supply and exhaust tubes (not shown) are each connected to those air supply and exhaust openings 153. The knob 154 is attached to each of the air supply and exhaust openings 153. The knob 154, which is a member for adjusting air supply volume or air exhaust volume, is capable of adjusting an elevating/lowering speed of the elevating-lowering table 134, which is identical to an elevating/lowering speed of the elevating-lowering plate 132. Note that it is preferable that the knob 154 adjusts air exhaust volume from the view of ease of speed adjustment (from the view of less likelihood of occurrence of speed unevenness).

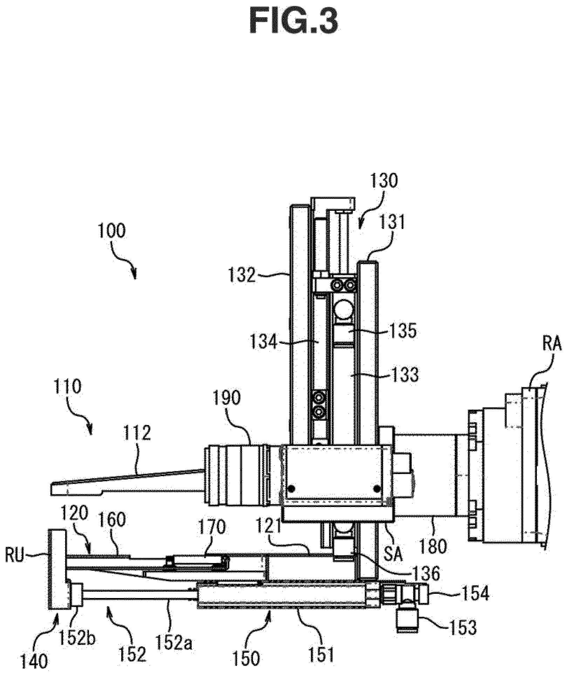

The pressing portion reciprocating mechanism 150, which is composed as described above, allows the pressing portion 140 to be reciprocated along the front-back direction by introducing and/or exhausting air. This allows for switching a state of the robot hand 100 to a pressing portion stand-by state shown in Fig. 2 or to a pressing portion projecting state shown in Fig. 3.

### (6) Sliding receptor

As shown in Fig. 1, the sliding receptor 160, which is a thick plate member having an elongated rectangular shape to be disposed on both sides of the claw portion 122 of the fixed finger 120 as shown in Fig. 1, is biased forward by the sliding receptor bias member 170 described later. Also, an upper surface of the tip of the sliding receptor 160 is on a surface including an upper surface of the tip of the claw portion 122 of the fixed finger 120 (a surface facing the movable finger 110). Note that the upper surface of the tip of the sliding receptor 160 may be disposed slightly lower than the upper surface of the tip of the claw portion 122 of the fixed finger 120.

### (7) Sliding receptor bias mechanism

As shown in Fig. 1, the sliding receptor bias members 170, each of which is a tension coil spring, are disposed on both sides of the claw portion 122 of the fixed finger 120 and on the rear side of the sliding receptor 160. The sliding receptor bias members 170 bias the sliding receptor 160 toward the front. In other words, when the sliding receptor 160 is released after the sliding receptor 160 is pushed rearward, the sliding receptor 160 is pushed back to the initial position by the sliding receptor bias member 170.

### (8) Connector

The connector 180, which is a portion for connecting the robot hand 100 to the arm RA, is a flange or the like, for example.

(9) As shown in Figs. 1 to 3, the imaging unit 190, which is, for example, a compact camera such as a CCD camera, is fixed to the right side of the movable finger reciprocating mechanism 130 by a support arm SA extending from the support plate 131 of the movable finger reciprocating mechanism 130. Note that the imaging unit 190 intermittently captures images to transmit electronic data for the captured images to a controller (not shown).

### <Usage example of Arm having Robot hand of an embodiment of the present invention>

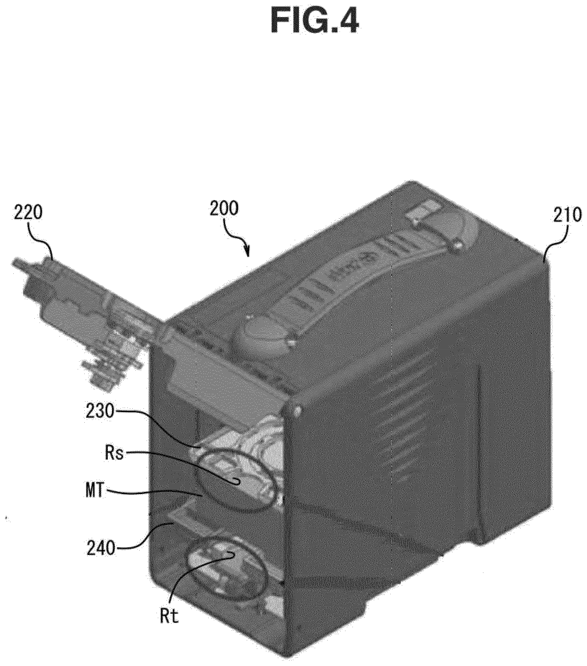

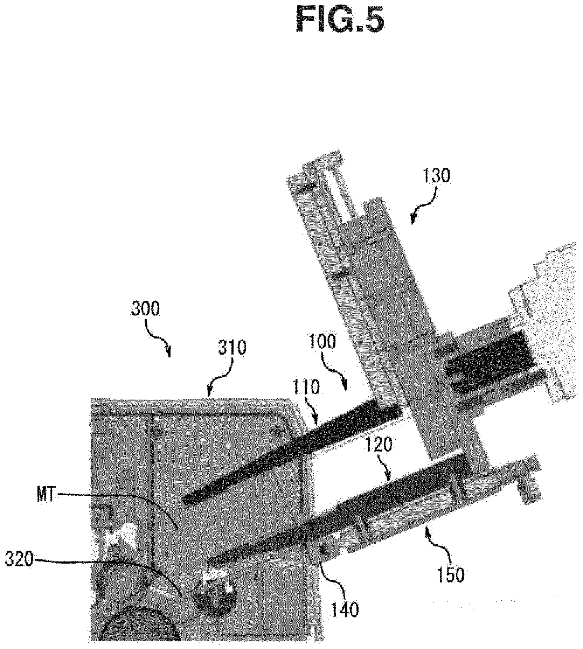

In an example, a case in which the arm RA (corresponding to "conveying device" in the scope of claim(s)) having the robot hand 100 of the present embodiment takes a bundle of bills out of a bill container, and conveys the bundle of bills to a placing tray of a bill sorting device will be described. Note that the bill container 200 shown in Fig. 4 is employed as an example of the bill container, and a placing tray 320 of a bill sorting device 300 shown in Fig. 5 is employed as an example of the placing tray of the bill sorting device. Note that the present invention should not be limited to this example.

Before describing the arm RA having the robot hand 100, the bill container 200 and the bill sorting device 300 will be briefly described. Note that the arm RA is, for example, an existing multi-axis robot arm.

As shown in Fig. 4, the bill container 200 is mainly composed of a case 210, a front lid 220, an upper support plate 230 and a lower support plate 240. As shown in Fig. 1, the case 210 is a rectangular parallelepiped box that opens toward the front side. The front lid 220 is a substantially rectangular plate member and is axially supported on the upper side of the opening edge of the case 210 so as to be opened and closed by an opening and closing mechanism such as a hinge. The upper support plate 230 is a member for sandwiching a bundle of bills in cooperation with the lower support plate 240, and is disposed so as to be vertically movable slightly above the center in the height direction of the case 210, as shown in Fig. 1. A semicircular notch Rs is formed at the front center of the upper support plate 230. The lower support plate 240 is a member that cooperates with the upper support plate 230 to grasp the bundle of bills MT, and is fixed to the lower side of the case 210 as shown in Fig. 1. A slit Rt is formed at the center in the width direction of the lower support plate 240. In the bill container 200 of the present embodiment, the upper support plate 230 is biased downward by a bias member (e.g., coil spring or the like) disposed on the upper side of the support plate 230; that is, the bundle of bills MT to be accommodated in the bill container 200 are pressed against the lower support plate 240 by the upper support plate 230.

The bill sorting device 300 is a device for counting various kinds of denominations while sorting, by denomination, the bundle of bills MT accommodated in the bill container 200. As shown in Fig. 5, the bill sorting device 300 includes a body 310 and a placing tray 320. A bill sorting mechanism that counts various kinds of denominations while sorting, by denomination, the bundle of bills MT supplied from the placing tray 320 is disposed in the body 310. The placing tray 320 is for placing the bundle of bills MT and is disposed beside a bill suction mechanism of the bill sorting mechanism. In other words, when a bill detection sensor of the bill suction mechanism of the bill sorting mechanism detects the bundle of bills MT placed on the placing tray 320, the bundle of bills MT are automatically sucked into the bill sorting mechanism by a bill suction device.

When the arm RA having the robot hand 100 takes the bundle of bills MT out of the bill container 200 and moves the bundle of bills MT to the placing tray 320 of the bill sorting device 300, the arm RA having the robot hand 100 operates as follows.

First, the controller controls the operation of the arm RA to move the robot hand 100 to a prescribed position and directs it toward a prescribed direction. Note that the prescribed position is a position on the front side of the container 200, and the prescribed direction is a direction in which the imaging unit 190 is able to capture the front of the bill container 200.

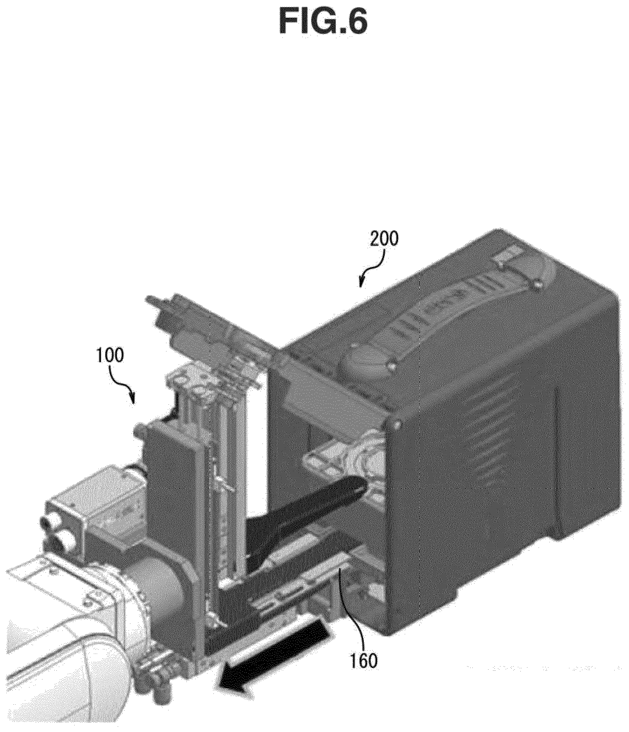

Next, the controller controls the arm RA and the robot hand 100 to elevate the movable finger 110 to the highest position, and then inserts the tip of the fixed finger 120 into the slit Rt of the lower support plate 240. Note that at that time the movable finger 110 is positioned above the notch Rs of the upper support plate 230. Also, at that time, the sliding receptor 160 contacts the wall portions on both sides of the slit Rt of the lower support plate 240 and moves backward, as shown in Fig. 6.

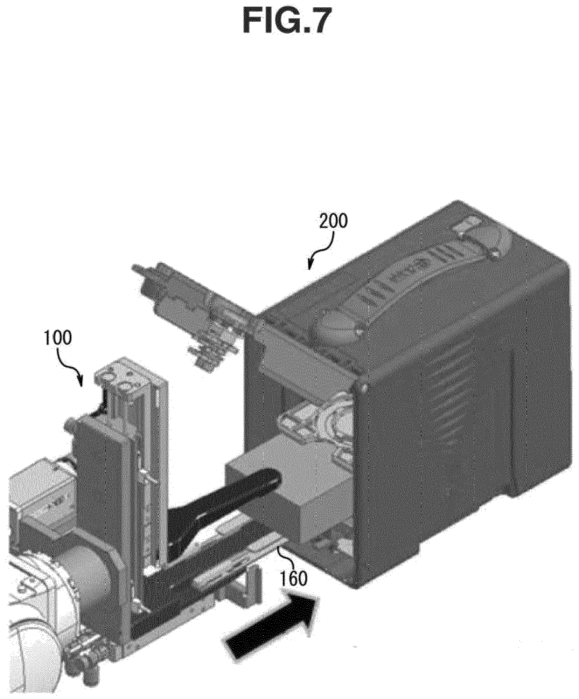

Next, the controller moves the movable finger 110 downward to grasp the bundle of bills MT together with the fixed finger 120. The controller controls the operation of the arm RA to move the robot hand 100 backward and take the bundle of bills MT out of the bill container 200. Note that as shown in Fig. 7, as the robot hand 100 moves backward, the sliding receptor 160 is moved forward.

Subsequently, as shown in Fig. 5, the controller controls the arm RA to insert the robot hand 100 from the front end side to the back side of the placing tray 320 of the bill sorting device 300, and then activates the pressing portion reciprocating mechanism 150 to move the pressing portion 140 forward; in addition to that, the controller controls the movable finger reciprocating mechanism 130 to elevate the movable finger 110 upward and release the bundle of bills MT.

While the pressing portion 140 is moving forward, the controller controls the arm RA to elevate the robot hand 100 obliquely backward while maintaining the inclination angle of the robot hand 100. This operation completes conveyance of the bundle of bills MT to the placing plate 320 of the bill sorting device 300. After completing conveyance of the bundle of bills MT, the controller activates the pressing portion reciprocating mechanism 150 to push back the pressing portion 140 backward; during such operation, the controller controls the operation of the arm RA to move the robot hand 100 to the prescribed position and direct it to the prescribed direction. Subsequently, as described above, a bundle of bills MT is taken out of the next bill container 200 conveyed to the same position, and then the bundle of bills are conveyed to the placing tray 320 of the bill sorting device 300.

### < Features of Robot hand of the present embodiment >

(1) The pressing portion 140 and the pressing portion reciprocating mechanism 150 are provided with the robot hand 100 of the present embodiment. The robot hand 100 of the present embodiment is attached to the arm RA and the controller. The controller controls the arm RA to insert the robot hand 100 from the front end side to the back side of the placing tray 320 of the bill sorting device 300 (refer to Fig. 5), and then introducing air into the cylinder holes of the pressing portion reciprocating mechanism 150 causes the pressing portion 140 to move forward; in addition, the controller controls the movable finger reciprocating mechanism 130 to elevate the movable finger 110 upward and release the bundle of bills MT. This allows the robot hand 100 to place all the bundles of bills MT to the placing tray 320 of the bill sorting device 300.
(2) The robot hand 100 of the present embodiment is provided with the sliding receptor 160 and the sliding receptor bias member 170. Thus, when a bundle of bills MT are sandwiched between the support plates 230 and 240 with a slim slit Rt only, the robot hand 100 can pick out the bundle of bills MT, and subsequently can stabilize the attitude of the bundle of bills MT.

### Modification

(A) The arm RA having the robot hand 100 of the above embodiment is controlled by the controller such that after inserting the robot hand 100 from the front end side to the back side of the placing tray 320 of the bill sorting device 300, the pressing portion 140 is moved forward and the movable finger 110 is elevated upward to release the bundle of bills MT; however, it may be controlled such that after moving the robot hand 100 to the front side portion of the tray 320 of the bill sorting device 300, the movable finger 110 is elevated upward to release the bundle of bills MT, and then after pushing the pressing portion 140 forward, the robot hand 100 is moved backward.
(B) The arm RA having the robot hand 100 of the above embodiment is controlled by the controller such that after moving the movable finger 110 downward and grasping the bundle of bills MT together with the fixed finger 120, the robot hand 100 is moved backward and the bundle of bills MT are taken out of the bill container 200; however it may be controlled such that after the robot hand 100 grasps the bundle of bills MT with the movable finger 110 and the fixed finger 120, the robot hand 100 moves backward by a certain distance to pull out the bundle of bills MT to the front by a certain length and then release the bundle of bills MT, and the robot hand 100 grasps again the portion of the bundle of bills MT that has been pulled out. This allows the length of the bundle of bills MT that is held by the robot hand 100 to be longer, thereby making the grasping state by the robot hand 100 more stable.
(C) In the robot hand 100 of the above embodiment, the pressing portion 140 and the pressing portion reciprocating mechanism 150 are disposed on the side opposite to the movable finger facing side of the fixed finger 120; however, the pressing portion 140 and the pressing portion reciprocating mechanism 150 may be disposed on the side opposite to the fixed finger facing side of the movable finger 110, or they may be disposed between the movable finger 110 and the fixed finger 120. Note that when the pressing portion 140 and the pressing portion reciprocating mechanism 150 are disposed between the movable finger 110 and the fixed finger 120, it is preferable that an accommodating space for the pressing portion 140 and the pressing portion reciprocating mechanism 150 is formed at the rear of the movable finger 110 and the fixed finger 120 so as not to obstruct the grasping operation by the movable finger 110 and the fixed finger 120.
(D) In the robot hand 100 of the above embodiment, the tension coil spring is employed as the sliding receptor bias members 170; alternatively, other biasing parts such as an air spring or biasing mechanism may be employed.
(E) In the robot hand 100 of the above embodiment, the sliding receptors 160 are disposed on both sides of the fixed finger 120; however, the sliding receptor 160 may be disposed only on one side of the fixed finger 120.
(F) In the robot hand 100 of the above embodiment, the sliding receptors 160 and the sliding receptor bias members 170 are disposed adjacent to the fixed finger 120; however, the sliding receptors 160 and the sliding receptor bias members 170 may be disposed adjacent to the movable finger 110, or may be disposed adjacent to both of the fixed finger 120 and the movable finger 110. In the latter case, sets of the sliding receptors 160 and the sliding receptor bias members 170 may be each provided so as to be adjacent to the fixed finger 120 and the movable finger 110. Note that in this modification, the contents described in the modification (E) may be applied.
(G) In the robot hand 100 of the above embodiment, the fixed finger 120 is fixed and only the movable finger is movable; however, the fixed fingers 120 may also be movable like the movable fingers 110.
(H) In the robot hand 100 of the first embodiment, the air cylinder mechanism is employed as the movable finger reciprocating mechanism 130; however, mechanisms like a known reciprocating mechanism such as a rack and pinion mechanism, a ball screw mechanism, an air cylinder mechanism, a motor cylinder mechanism, an electric slider mechanism, a belt slider mechanism and a linear slider mechanism may be employed as the movable finger reciprocating mechanism 130. In such a case, an electric motor may be employed as a drive source.
(I) In the robot hand 100 of the first embodiment, the air cylinder mechanism is employed as the pressing portion reciprocating mechanism 150; however, mechanisms like a known reciprocating mechanism such as a rack and pinion mechanism, a ball screw mechanism, an air cylinder mechanism, a motor cylinder mechanism, an electric slider mechanism, a belt slider mechanism and a linear slider mechanism may be employed as the pressing portion reciprocating mechanism 150. In such a case, an electric motor may be employed as a drive source.
(J) Although not particularly mentioned in the first embodiment, the controller may analyze the front image of the bill container 200 captured by the imaging unit 190 to determine the position of the notch Rs of the upper support plate 230 and the slit Rt of the lower support plate 240, then may control the arm RA and the robot hand 100 to adjust the position of the movable finger 110, may insert the tip of the movable finger 110 into the notch Rs of the upper support plate 230, and may insert the tip of the fixed finger 120 into the slit Rt of the lower support plate 240.

## Claims

1. A robot hand comprising:
a first finger portion;
a second finger portion provided to be opposite to the first finger portion;
a finger portion moving mechanism that moves at least one of the first finger portion and the second finger portion along an opposite direction of the first finger portion and the second finger portion;
a pressing portion; and
a pressing portion reciprocating mechanism that reciprocates the pressing portion along a direction parallel to a depth direction of the first finger portion.

2. The robot hand according to claim 1, wherein the pressing portion and the pressing portion reciprocating mechanism are disposed in a side opposite to a facing side in which a finger portion of at least one of the first finger portion and the second finger portion faces the other finger portion.

3. A conveying device comprising:
the robot hand according to claim 1 or 2;
an arm connected to the robot hand; and
a controller that controls operation of the finger portion moving mechanism and the pressing portion reciprocating mechanism of the robot hand and operation of the arm, and
wherein the controller controls the finger portion moving mechanism to separate the first finger portion and the second finger portion from each other while controlling the pressing portion reciprocating mechanism to push the pressing portion forward, and then controls the arm to move the robot hand backward.

4. A conveying device comprising:
the robot hand according to claim 1 or 2;
an arm connected to the robot hand; and
a controller that controls operation of the finger portion moving mechanism and the pressing portion reciprocating mechanism of the robot hand and operation of the arm, and
wherein the controller controls the finger portion moving mechanism to separate the first finger portion and the second finger portion from each other, and then controls the pressing portion reciprocating mechanism to push the pressing portion forward, and controls the arm to move the robot hand backward.
